# EUROPÄISCHE PATENTSCHRIFT

(11) **EP 1 207 324 B1**
(45) Veröffentlichungstag und Bekanntmachung des Hinweises auf die Patenterteilung: **03.05.2006**
(21) Anmeldenummer: 01125599.9
(22) Anmeldetag: 26.10.2001
(51) Int. Cl.: F16J 15/16, F01D 11/00

(54) **Dichtungsanordnung zwischen Bauteilen einer rotierenden Baugruppe sowie Verfahren zur Herstellung einer Dichtverbindung**
Sealing between two elements of a rotating unit, method for making a sealing joint
Joint d'étanchéité entre deux pièces d'un groupe rotatif, méthode pour la réalisation de la jonction étanche

(30) Priorität: 18.11.2000 DE 10057395
(43) Veröffentlichungstag der Anmeldung: 22.05.2002
(73) Patentinhaber: Alstom Technology Ltd, 5400 Baden (CH)
(72) Erfinder: Beeck, Alexander, Dr., Orlando, Florida 32828 (US); Rathmann, Ulrich, 5400 Baden (CH)

(56) Entgegenhaltungen:
- EP-A- 0 890 710
- GB-A- 1 565 018
- US-A- 4 505 200
- US-A- 5 240 375
- US-A- 5 297 804

## Beschreibung

### Technisches Anwendungsgebiet

Die vorliegende Erfindung betrifft eine Dichtungsanordnung zwischen zwei radial aneinander grenzenden Bauteilen einer im Betrieb rotierenden Baugruppe, insbesondere dem Rotor und der Laufschaufel einer Gasturbinenkomponente, mit einem Dichtungselement in einer Ausnehmung eines inneren der beiden Bauteile an der Grenzfläche zum äußeren der beiden Bauteile, sowie ein Verfahren zur Herstellung einer Dichtverbindung zwischen zwei Bauteilen.

Dampfgekühlte Gasturbinenkomponenten benötigen sehr zuverlässige Dichtungen für den Transport des zur Kühlung eingesetzten Dampfes, da eine Leckage einerseits den Wirkungsgrad des thermodynamischen Prozesses verschlechtert und andererseits die Lebensdauer der folglich schlechter gekühlten Komponente verkürzt. Besondere Anforderungen an die Dichtverbindungen werden bei rotierenden Komponenten, wie beispielsweise Turbinenlaufschaufeln, gestellt, da der Dampf in diesen Fällen vom ruhenden System in das rotierende System geführt werden muss. In gleicher Weise muss der Dampf wieder aus der rotierenden Komponente in das ruhende System zurückgeführt werden, so dass typischerweise zwei Dichtverbindungen pro Komponente erforderlich sind. In der Regel sind derartige Dichtverbindungen zwischen den in der Rotorscheibe verlaufenden Kühlkanälen und den in den Laufschaufeln der Turbine verlaufenden Kühlkanälen erforderlich. Die Laufschaufeln sind hierbei mit ihrem Schaufelfuß in entsprechenden Nuten bzw. Führungen an der Rotorscheibe eingehängt, wobei sowohl die Nut wie auch der Schaufelfuß entsprechend komplementäre in der Regel tannenbaumförmige Geometrien aufweisen. Der Übergang der Kühlkanäle von der Rotorscheibe zur Laufschaufel und umgekehrt erfolgt in dieser Nut der Rotorscheibe.

Aufgrund der erforderlichen Dichtungen gestaltet sich jedoch der Zusammenbau der Laufbeschaufelung mit dem Rotor, bei dem der Schaufelfuß seitlich in die entsprechende Nut an der Rotorscheibe geschoben wird, sehr aufwendig.

### Stand der Technik

Ein Beispiel für eine Dichtverbindung zwischen der Rotorscheibe und der Laufbeschaufelung einer Turbinenkomponente ist in der US 5,318,404 dargestellt. Die dort gezeigte Dichtungsanordnung wird durch jeweils sich gegenüberliegende Ausnehmungen am Schaufelfuß und der Rotorscheibe gebildet, in denen ein muffenartiges Dichtungselement sitzt. Dieses Dichtungselement dichtet die Verbindung zwischen den Kühlkanälen in der Laufschaufel und den Kühlkanälen in der Rotorscheibe ab. Zur besseren Montierbarkeit der muffenartigen Dichtungselemente, die sich in eingebautem Zustand über die volle radiale Ausdehnung des durch die Ausnehmungen gebildeten Hohlraums erstrecken, wird vorgeschlagen, diese Dichtungselemente radial elastisch auszugestalten. Bei der Montage werden diese dann beim Einschieben der Laufschaufel vollständig in die Ausnehmung an der Rotorscheibe gedrückt und dehnen sich aufgrund ihrer Vorspannung in die entsprechende Ausnehmung am Fuß der Laufschaufel aus, sobald die beiden Ausnehmungen übereinander liegen. Die Dichtungselemente sind dabei so ausgebildet, dass sie auch nach Montage der Laufschaufeln noch unter einer ausreichenden Vorspannung stehen, um den für die Dichtwirkung erforderlichen Anpressdruck an Rotorscheibe und Laufschaufel aufzubringen.

Durch eine derartige Ausgestaltung der Dichtverbindung wird zwar die Montage der Laufbeschaufelung gegenüber starren Dichtungselementen erleichtert, die Notwendigkeit des Eindrückens der Dichtungselemente gegen die Vorspannung beim Einbau der Laufbeschaufelung kann aber dennoch zu Komplikationen führen.

EP 890 710 offenbart eine Dichtungsvorrichtung zum Abdichten von Kühlkanälen zwischen dem Rotor und einer Laufschaufel einer Gasturbine. Dabei ist eine Hülse verschieblich in eine Ausnehmung des Rotors eingesetzt. Im Betrieb wird diese Hülse durch die Fliekraft nach aussen gegen die Laufschaufel gedrückt und stellt so die dichten de Verbindung her.

Ausgehend von diesem Stand der Technik liegt der Erfindung die Aufgabe zugrunde, eine Dichtungsanordnung sowie ein Verfahren zum Herstellen einer Dichtverbindung zwischen zwei Bauteilen anzugeben, die eine leichtere Montage der Bauteile, insbesondere der Laufschaufeln an der Rotorscheibe einer Gasturbinenkomponente, ermöglichen.

### Darstellung der Erfindung

Die Lösung der gestellten Aufgabe wird mit den Merkmalen der Anspruchs 1 erreicht.

Die erfindungsgemäße Dichtungsanordnung zwischen zwei radial aneinander grenzenden Bauteilen einer im Betrieb rotierenden Baugruppe, insbesondere dem Rotor und der Laufschaufel bzw. dem Schaufelfuß einer Gasturbinenkomponente, weist in bekannter Weise ein Dichtungselement in einer Ausnehmung eines inneren der beiden Bauteile an der Grenzfläche zum äußeren der beiden Bauteile auf. Das Dichtungselement ist bei der vorliegenden Dichtungsanordnung derart ausgebildet, dass es bei der Montage, d.h. beim Einsetzen bzw. Einlegen in die Ausnehmung, nicht oder nur geringfügig über die Ausnehmung hinausragt und bei der Rotation der Baugruppe durch die einwirkende Fliehkraft eine dichtende Verbindung zwischen den Bauteilen herstellt. Die Abmessung des Dichtungselementes in radialer Richtung - bezüglich der Rotationsachse der Baugruppe - muss daher so gewählt sein, dass sie (beim Einsetzen des Dichtungselementes) die Tiefe der Ausnehmung am inneren, d.h. der Rotationsachse näher gelegenen, Bauteil nicht oder nur unwesentlich überschreitet. Hierdurch wird ein leichtes Einschieben einer Laufschaufel in die schwalbenschwanz- bzw. tannenbaumförmige Nut an der Rotorscheibe erleichtert, da das in die Ausnehmung eingesetzte Dichtungselement beim Einschiebevorgang nicht mehr störend im Wege steht. Unter einer geringfügig über die Ausnehmung hinausragenden Anordnung ist zu verstehen, dass das Dichtungselement nur so weit über die Ausnehmung hinausragt, dass es bei der Montage gerade noch nicht störend im Wege steht. Im Gegensatz zum einleitend beschriebenen Stand der Technik ist hierbei kein zusätzliches Niederdrücken des Dichtungselementes erforderlich.

Die eigentliche Dichtwirkung wird bei der vorliegenden Dichtungsanordnung erst bei einer Rotation der Baugruppe erzielt, bei der das Dichtungselement mit seinen Dichtflächen gegen Dichtflächen des äußeren Bauteils und gegebenenfalls der Innenwandung der Ausnehmung gedrückt wird. Für die hierfür erforderliche Ausgestaltung des Dichtungselementes stehen unterschiedliche Möglichkeiten zur Verfügung, wie sie in den Unteransprüchen sowie den Ausführungsbeispielen beispielhaft dargestellt sind.

Eine prinzipielle Möglichkeit der Ausgestaltung besteht darin, dass sich das gesamte Dichtungselement unter Einwirkung der Fliehkraft gegen das zweite Bauteil bewegt und an dieses angepresst wird, wobei seitliche verformbare und/oder elastische Randbereiche gleichzeitig gegen die Seitenwandung der Ausnehmung des inneren Bauteils gepresst werden. Eine weitere Möglichkeit besteht darin, einen unteren Bereich des Dichtelementes in der Ausnehmung zu fixieren und einen oberen bzw. äußeren Bereich expandierbar auszugestalten. Der expandierbare Bereich wird hierbei unter Einwirkung der Fliehkraft gegen das äußere Bauteil gepresst. Das äußere Bauteil kann in allen Fällen entweder ohne oder mit einer entsprechenden Ausnehmung ausgestaltet sein.

Geeignete Materialien für Dichtungselemente sind dem Fachmann bekannt. Bei der vorliegenden Dichtungsanordnung kann es sich hierbei um elastische oder teilelastische Dichtungselemente handeln, die im Ruhezustand der Baugruppe wieder ihre Ausgangsform einnehmen. Es ist jedoch auch möglich, deformierbare Materialien als Dichtungselemente einzusetzen, die aufgrund der einwirkenden Fliehkraft ihre Form verändern, um die erforderliche dichtende Wirkung herbeizuführen, und nach Abschalten der Baugruppe bzw. im Ruhezustand der Baugruppe diese letzte Form beibehalten. Im ersten Fall kehren die Dichtungselemente bei einer entsprechenden Stellung der Baugruppe im Ruhezustand in ihre Ausgangslage in der Ausnehmung zurück, so dass auch eine leichte Demontage der Laufschaufeln ermöglicht wird. Im zweiten Fall müssen die Dichtungselemente bei der Demontage der Laufschaufeln zerstört werden.

Die Dichtungselemente bzw. Dichtungen der vorliegenden Dichtungsanordnung, die erst bei Rotation der Baugruppe durch Fliehkraft in den Dichtsitz gepresst werden, können sehr einfach aufgebaut werden. Bei einem Einsatz in Gasturbinen dichten sie dennoch sehr zuverlässig, da bei den entsprechenden Drehzahlen bei Gasturbinen sehr hohe Fliehkräfte erreicht werden (ca. 10.000 g). Die Dichtungen können so ausgelegt werden, dass bei Stillstand der Maschine die Dichtungen wieder in ihre ursprüngliche Lage zurückkehren, um den Ausbau der Schaufeln zu erleichtern. Dies kann auch durch zusätzliche Maschinenelemente wie Federn unterstützt werden.

Eine weitere, in Anspruch 15 angegebene Ausgestaltung einer erfindungsgemäßen Dichtungsanordnung zur Lösung der obigen Aufgabe nutzt ebenfalls die Fliehkraft zur Herstellung der Dichtverbindung. Bei dieser alternativen Ausgestaltung wird gleichfalls ein Dichtelement eingesetzt, das nicht oder nur geringfügig über die Ausnehmung am inneren Bauteil hinausragt. Das äußere Bauteil wird hierbei so aufgehängt oder befestigt, dass die bei Rotation der Baugruppe auftretenden Kräfte ein Kippmoment auf das äußere Bauteil ausüben, durch das dieses gegen die Dichtung gedrückt wird. Auf diese Weise wird auch in diesem Fall die dichtende Verbindung erst im Betrieb der Baugruppe hergestellt. Das Dichtungselement kann hierbei noch einfacher ausgestaltet sein und sollte geringfügig über die Ausnehmung hinausragen, jedoch nur so weit, dass es den Einbau der Laufschaufel nicht behindert.

Grundsätzlich ist die vorliegende Anordnung für beliebige Dichtungsaufgaben einsetzbar. Bevorzugt wird sie jedoch zur Herstellung einer Dichtverbindung zwischen Kühlkanälen in den beiden radial aneinander grenzenden Bauteilen eingesetzt.

Das erfindungsgemäße, in Anspruch 16 angegebene Verfahren zur Herstellung einer Dichtverbindung zwischen zwei Bauteilen nutzt ebenfalls die Einwirkung einer Fliehkraft zur Herstellung der dichtenden Verbindung. Hierbei wird ein Dichtungselement in die Ausnehmung des ersten Bauteiles eingesetzt. Das Dichtungselement ist derart ausgestaltet, dass es nach Einsetzen in die Ausnehmung nicht oder nur geringfügig über die Ausnehmung hinausragt und bei Beaufschlagung mit einer zum zweiten Bauteil gerichteten Kraft die dichtende Verbindung herstellen kann. Nach dem Einsetzen des Dichtungselementes in die Ausnehmung und Montage des zweiten Bauteils wird das Dichtelement mit einer zum zweiten Bauteil gerichteten Fliehkraft beaufschlagt, indem die beiden Bauteile der Baugruppe geeignet in Rotation versetzt oder geschleudert werden.

Durch dieses Verfahren ist es möglich, eine dichtende Verbindung auch zwischen im Betrieb nicht rotierenden Bauteilen herzustellen, indem diese vor ihrem Einsatz entsprechend geschleudert werden. In letzterem Fall muss selbstverständlich ein Dichtungselement verwendet werden, das nach dem Schleudern nicht mehr in seine Ausgangsform und/oder seine Ausgangslage zurückkehrt. Besonders vorteilhaft lässt sich hierbei ein Dichtungselement einsetzen, das bei der Montage fest ist und während des Schleuderns bei Beaufschlagung mit einer erhöhten Temperatur schmilzt. Die Schmelze passt sich dann dem zu dichtenden Spalt an, so dass nach dem Abkühlen eine optimale Abdichtung erzielt ist.

Es versteht sich von selbst, dass die vorliegende Dichtungsanordnung und das beschriebene Dichtverfahren für beliebige Dichtungsaufgaben eingesetzt werden können. Die Anwendung der Erfindung ist nicht auf die bevorzugte Anwendung bei Gasturbinenkomponenten beschränkt, auch wenn sie dort erhebliche Vorteile bieten.

### Kurze Beschreibung der Zeichnungen

Die vorliegende Dichtungsanordnung sowie das Verfahren zur Herstellung einer Dichtverbindung werden nachfolgend ohne Beschränkung des allgemeinen Erfindungsgedankens anhand von Ausführungsbeispielen in Verbindung mit den schematischen Zeichnungen nochmals kurz erläutert. Hierbei zeigen:
- Fig. 1: ein erstes Beispiel für eine Dichtungs-Anordnung zum Abdichten einer Kühlkanalverbindung zwischen der Rotorscheibe und der Laufschaufel einer Gasturbine;
- Fig. 2: ein zweites Beispiel einer Dichtungs-Anordnung zum Abdichten einer Kühlkanal- verbindung zwischen der Rotorscheibe und der Laufschaufel einer Gasturbine;
- Fig. 3: ein drittes Beispiel einer Dichtungs-Anordnung zum Abdichten einer Kühlkanalverbindung zwischen der Rotorscheibe und der Laufschaufel einer Gasturbine;
- Fig. 4: ein viertes Beispiel einer Dichtungsanordnung zum Abdichten einer Kühlkanalverbindung zwischen der Rotorscheibe und der Laufschaufel einer Gasturbine;
- Fig. 5: ein fünftes Beispiel einer Dichtungsanordnung zum Abdichten einer Kühlkanalverbindung zwischen der Rotorscheibe und der Laufschaufel einer Gasturbine; und
- Fig. 6: ein sechstes Beispiel einer Dichtungsanordnung zum Abdichten einer Kühlkanalverbindung zwischen der Rotorscheibe und der Laufschaufel einer Gasturbine.

### Wege zur Ausführung der Erfindung

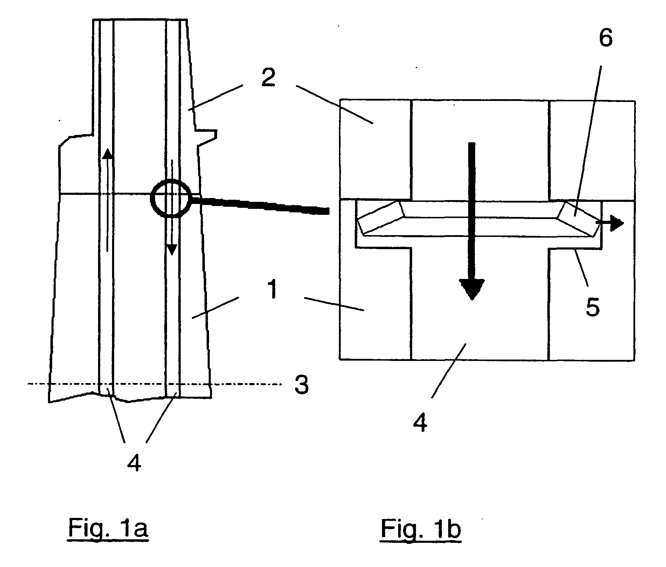

Fig. 1a zeigt ausschnittsweise einen Schnitt durch eine Verbindung zwischen einer Rotorscheibe 1 und einer Laufschaufel 2 einer Gasturbine. Die Verbindung dieser beiden Bauteile erfolgt wie dies bereits im einleitenden Teil der vorliegenden Patentanmeldung beschrieben wurde. In der Figur ist weiterhin die Rotationsachse 3 angedeutet, um die die Rotorscheibe 1 mit den Laufschaufeln 2 während des Betriebes rotiert. Weiterhin sind zwei Kühlkanäle 4 zu erkennen, von denen der linke der Dampfzufuhr von der Rotorscheibe 3 zur Laufschaufel 2 und der rechte der Dampfableitung von der Laufschaufel 2 dienen. Die entsprechenden Flussrichtungen des zur Kühlung der Laufschaufel eingesetzten Dampfes sind in der Figur durch Pfeile angedeutet. Gerade an der Grenzfläche zwischen der Rotorscheibe 1 und der Laufschaufel 2 sind im Bereich der Kühlkanäle 4 gute Dichtungen erforderlich, um die Kühlwirkung durch Leckage an dieser Stelle nicht negativ zu beeinträchtigen.

Fig. 1b zeigt in vergrößerter Ansicht den Bereich der Schnittstelle zwischen Laufschaufel 2 und Rotorscheibe 1 im Bereich des Kühlkanals für die Dampfableitung der Fig. 1a. Die Flussrichtung des Dampfes ist wiederum durch den in Kühlkanalrichtung verlaufenden Pfeil angedeutet. In der Rotorscheibe ist eine Ausnehmung 5 zu erkennen, in der ein Dichtungselement 6 angeordnet ist. Die Abbildung (Fig. 1b) gibt einen Zustand wieder, wie er während der Rotation der Baugruppe um die Rotationsachse 3 auftritt.
Das Dichtungselement 6 ist im vorliegenden Fall tellerfederartig ausgebildet und weist einen zentralen Durchlass für den Dampf auf. Durch diese tellerfederartige Ausbildung wird ein zentraler Bereich des Dichtungselementes durch die in der Figur entgegen der Flussrichtung des Dampfes gerichtete Fliehkraft gegen eine entsprechende Fläche der Laufschaufel 2 gepresst. Die Randbereiche des Dichtungselementes 6, die von der Laufschaufel 2 weggerichtet sind, werden durch die auftretende Fliehkraft ebenfalls zur Laufschaufel 2 hin und somit automatisch gegen die Seitenflächen der Ausnehmung 5 der Rotorscheibe gepresst (durch den seitlichen Pfeil angedeutet). Durch diese Wirkung der Fliehkraft wird somit die Kühlkanalverbindung zwischen der Laufschaufel 2 und der Rotorscheibe 1 gut abgedichtet. Das Dichtungselement 6 ist hierbei derart ausgebildet, dass es im Ruhezustand nicht über die Ausnehmung 5 hinausragt.
Es versteht sich von selbst, dass eine derartige Dichtungsanordnung für sämtliche Kühlkanalverbindungen der Rotorscheibe mit den Laufschaufeln eingesetzt wird.

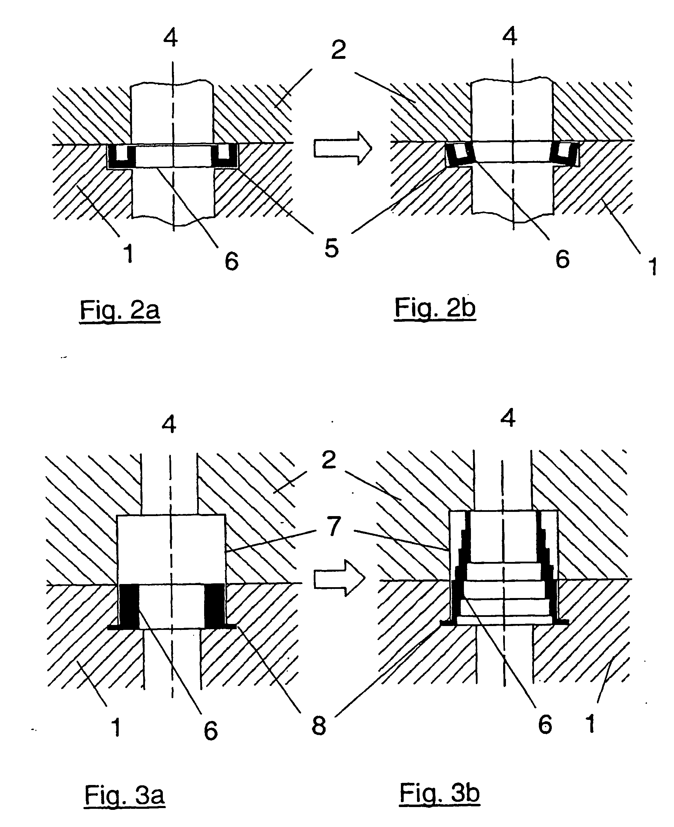

Fig. 2 zeigt ein weiteres Beispiel für die Ausbildung eines Dichtungselementes 6 zur Abdichtung einer Verbindung zwischen zwei Bauteilen 1, 2. Die abzudichtende Kanalverbindung ist in diesem, wie auch in den weiteren Ausführungsbeispielen, ebenfalls mit dem Bezugszeichen 4 versehen. Fig. 2a zeigt hierbei eine ringförmige Ausbildung des Dichtelementes 6 mit U-förmigem Querschnitt des Dichtungskörpers. Unter ringförmiger Ausbildung sind in diesem Zusammenhang nicht nur kreisrunde Formen des Ringes sondern auch andere, beispielsweise elliptische, Formen zu verstehen. Das Dichtelement hat eine zentrale Durchgangsöffnung und sitzt in einer am inneren Bauteil 1 ausgebildeten Ausnehmung 5.
Der Fig. 2a ist insbesondere zu entnehmen, dass das Dichtungselement 6 im gezeigten (Ruhe-)Zustand nicht über die Ausnehmung 5 hinausragt. In diesem Zustand wird keine dichtende Verbindung zwischen den beiden Bauteilen 1, 2 erzeugt. Das Dichtungselement 6 ist derart ausgebildet, dass der äußere Schenkel des U-querschnittsförmigen Dichtungskörpers über den inneren Schenkel hinausragt. Durch eine derartige Ausgestaltung wird eine optimale Abdichtung durch die während der Rotation der Bauteile einwirkende Fliehkraft ermöglicht.
Fig. 2b zeigt den Zustand während der Rotation, bei dem die Fliehkraft auf das Dichtungselement 6 einwirkt. Durch diese Einwirkung kippt in Zusammenwirkung mit den unterschiedlich langen Schenkeln der U-förmige Rand nach außen, so dass der äußere Schenkel gegen die Seitenwandung der Ausnehmung 5 und der innere Schenkel gegen die Dichtfläche des äußeren Bauteils 2 gedrückt werden. Hierdurch wird ersichtlich die erwünschte Dichtwirkung erzielt. Diese ist besonders beim Einsatz in der rotierenden Komponente einer Gasturbine sehr zuverlässig, da die auftretenden Fliehkräfte ausreichend groß sind.

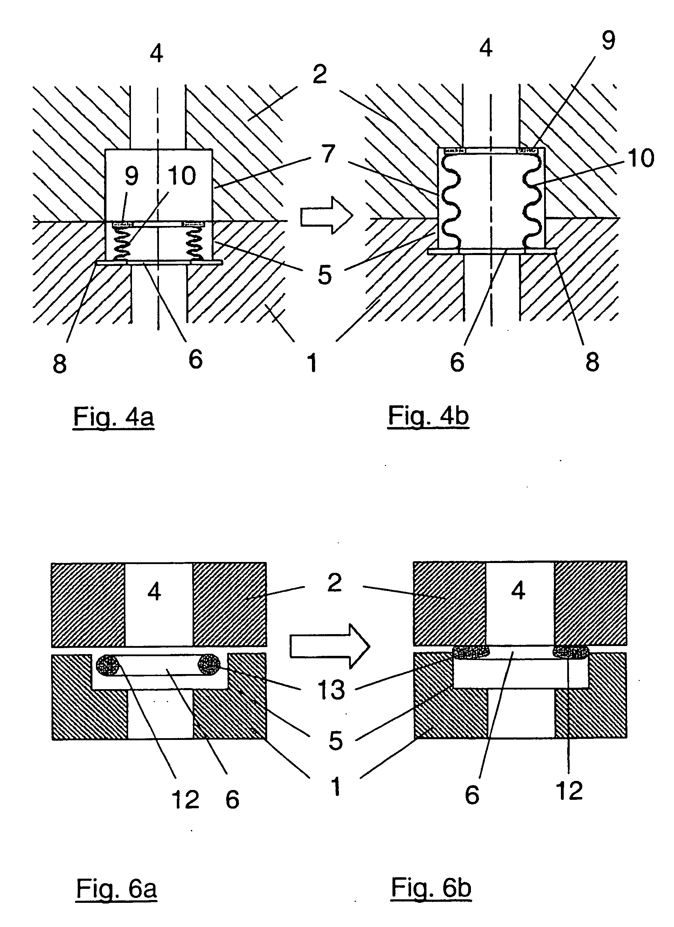

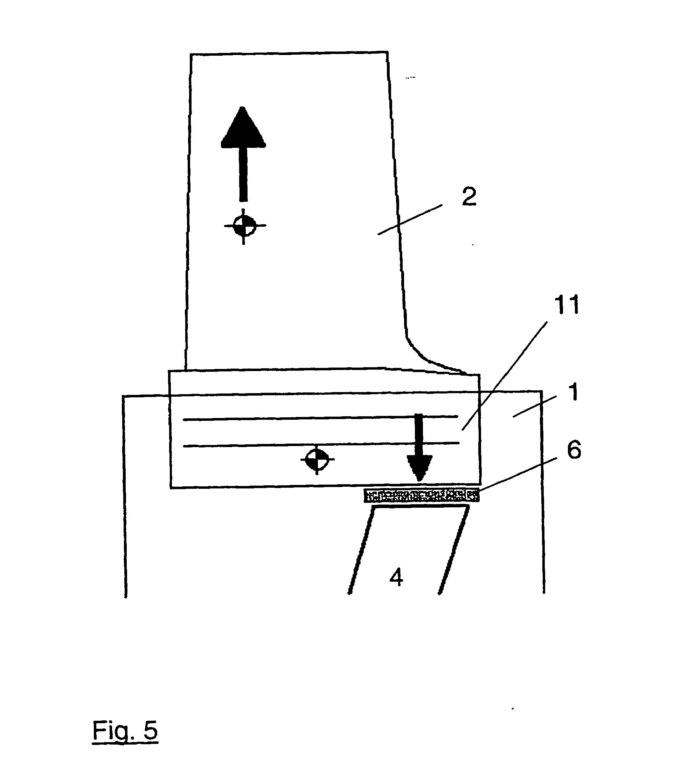

Ein weiteres Beispiel für die Ausgestaltung einer Dichtungsanordnung gemäß der vorliegenden Erfindung ist in Fig. 3 dargestellt. In diesem Falle weist das äußere Bauteil 2 ebenfalls eine Ausnehmung 7 auf. Das Dichtungselement 6 ist über eine entsprechende Nut 8 in der Ausnehmung fixiert. Durch diese Fixierung wird das Dichtungselement bereits dichtend gegen das innere Bauteil 1 gepresst. Fig. 3a zeigt wiederum den Ruhezustand, wie er beispielsweise kurz nach der Montage der Bauteile vorliegt. Im Ruhezustand ragt das Dichtungselement 6 nicht über die Ausnehmung 5 im inneren Bauteil 1, beispielsweise der Rotorscheibe, hinaus. In diesem Zustand wird jedoch auch noch keine dichtende Wirkung erzielt. Im vorliegenden Beispiel ist das Dichtungselement 6 derart ausgestaltet, dass es bei Rotation der Baugruppe durch die auftretende Fliehkraft teleskopartig ausfährt, wie aus Fig. 3b ersichtlich ist. Ein derartiger teleskopartiger Aufbau des Dichtungselementes 6 kann beispielsweise durch Wickeln des Dichtungselementes aus einem dünnen Blech erfolgen. Durch Einwirken der Fliehkraft wird der teleskopartige Ausleger des Dichtungselementes 6 mit großer Kraft gegen die entsprechenden Dichtflächen am äußeren Bauteil 2 gepresst und stellt damit die gut dichtende Verbindung der Kühlkanäle 4 zwischen den beiden Bauteilen her. Je nach Materialwahl kann das Dichtungselement in diesem Falle bei Abschalten der Baugruppe im Ruhezustand wieder in die in Fig. 3a gezeigte Ausgangsposition zurückkehren oder in der in Fig. 3b gezeigten Position verbleiben.

Fig. 4 zeigt ein weiteres Ausführungsbeispiel für eine Dichtungsanordnung, die ähnlich der der Fig. 3 ausgeführt ist. In diesem Fall wird das Dichtungselement 6 wie bei Fig. 3 über eine Nut 8 in der Ausnehmung 5 des inneren Bauteils 1 fixiert. An der dem äußeren Bauteil 2 zugewandten Seite des Dichtungselementes 6 ist eine Dichtungsscheibe 9, beispielsweise aus Weichmetall, vorgesehen, die über einen Faltenbalg 10 mit dem fixierten Teil des Dichtungselementes verbunden ist. Die Dichtungsscheibe 9 dient hierbei als Masse, die durch die im Betrieb auftretende Fliehkraft gegen den Dichtsitz am äußeren Bauteil 2 gepresst wird, wie in Fig. 4b zu erkennen ist. Der Faltenbalg 10 zieht sich dabei auseinander. In Fig. 4a ist wiederum zu erkennen, dass das Dichtungselement 6 mit der Dichtscheibe 9 und dem Faltenbalg 10 im Ruhezustand, wie bei der Montage der Bauteile, nicht über die Ausnehmung 5 hinausragt.

Fig. 5 zeigt ein Ausführungsbeispiel einer Dichtungsanordnung, bei der die dichtende Wirkung über das Einwirken der Fliehkraft auf die Laufschaufel 2 einer Gasturbine erzeugt wird. Die Befestigung der Laufschaufel 2 wird hierbei so gestaltet, dass durch die während der Rotation auftretende Fliehkraft ein Kippmoment erzeugt wird, welches Teile des Schaufelfußes 11 auf ein Dichtungselement 6 oder eine bestimmte Stelle der Rotorscheibe 1 drückt. Die Wirkung des Kippmomentes ist durch die beiden Pfeile angedeutet. Der Kühlkanal 4 in der Rotorscheibe 1 ist hierbei nur stark schematisiert zu erkennen. Die Kühlkanäle in der Laufschaufel 2 sind nicht dargestellt. Das Dichtungselement 6 kann bei einer derartigen Ausführungsform vereinfacht, beispielsweise ringförmig mit rundem oder rechteckigem Querschnitt, aufgebaut sein. Es sollte nur geringfügig über die entsprechende Ausnehmung in der Rotorscheibe 1 hinausragen, um den Einbau der Laufschaufel 2 nicht zu behindern. Die dichtende Wirkung wird hierbei durch das bei der Rotation auftretende Kippmoment der Laufschaufel 2 erzielt, die den erforderlichen Anpressdruck an das Dichtungselement 6 erzeugt.

Fig. 6 zeigt schließlich ein letztes Beispiel für eine Ausgestaltung einer erfindungsgemäßen Dichtungsanordnung. Bei diesem Ausführungsbeispiel sitzt wiederum das Dichtungselement 6 im Ruhezustand (Fig. 6a) in der Ausnehmung 5 am inneren Bauteil 1. Im vorliegenden Fall besteht dieses Dichtungselement 6 aus einem umhüllenden Ring aus dünnem Material 12, der mit einer Flüssigkeit 13 gefüllt ist. Bei Einwirkung der Fliehkraft während der Rotation der Baugruppe (Fig. 6b) deformiert sich das Dichtungselement 6 derart, dass sämtliche Leckageflächen abgedichtet werden. Ein Beispiel für ein derartiges Dichtungselement 6 ist ein mit Natrium oder einem anderen Stoff mit niedrigem Schmelzpunkt gefüllter metallischer O-Ring. Bei ansteigender Temperatur schmilzt die Füllung 13 und die Fliehkraft erzeugt eine Flüssigkeits-Druckverteilung, welche den Dichtungsring 6 derart verformt, dass eine optimale Abdichtung erzielt wird.

Bei geeigneter Gestaltung der Dichtflächen an den beiden Bauteilen und hoher Oberflächenspannung der Schmelze kann auch auf die Umhüllung 12 aus dem dünnen Material verzichtet werden. Die Dichtung wird dann alleine durch die Flüssigkeit 13 realisiert, wobei der Innendruck mit der Oberflächenspannung im Gleichgewicht steht. Die bei der Rotation auftretenden Fliehkräfte pressen das Dichtfluid 13 in die gewünschte Form.

Diese Lösungsvariante ermöglicht auch eine sich selbst gießende Dichtung. Hierbei wird die Dichtung aus einem Material gebildet, welches nach der Montage aufgrund der auftretenden hohen Temperaturen schmilzt und den entsprechenden zu dichtenden Bereich vollständig ausfüllt. Durch das Ausdiffundieren von Legierungselementen aus dem angrenzenden Material der in der Regel metallischen Bauteile erhöht sich mit der Zeit der Schmelzpunkt des Dichtungsmaterials und die Dichtung wird fest. Auch bei dieser Ausgestaltung wird die Dichtung in Form der Schmelze zum Abdichten wiederum durch Fliehkraft in die richtige Form gepresst. Diese Technik kann auch angewendet werden, um Dichtungen für nichtrotierende Komponenten zu erzeugen. Hierbei müssen die erforderlichen Fliehkräfte lediglich durch Schleudern der Bauteile bei der Herstellung der Dichtung erzeugt werden. Dadurch wird eine Dichtung realisiert, welche dann genau zu dem entsprechenden Bauteil passt. Auf diese Weise können beispielsweise Dichtungen zu den Leitschaufeln einer Gasturbine realisiert werden.

Grundsätzlich können die für das Dichtungselement eingesetzten Materialien auch derart gewählt werden, dass sie einen thermischen Ausdehungskoeffizienten aufweisen, der größer als der der umgebenden Teile ist. Hierdurch kann die Dichtungswirkung während des Betriebes durch die zusätzliche thermische Ausdehnung des Dichtungselementes nochmals unterstützt werden. Weiterhin ist auch die Verwendung von Gedächtnislegierungen oder Bi-Metallen als Materialien für das Dichtungselement möglich.

### BEZUGSZEICHENLISTE

| | |
|---|---|
| 1 | Rotorscheibe |
| 2 | Laufschaufel |
| 3 | Rotationsachse |
| 4 | Kühlkanal |
| 5 | Ausnehmung im inneren Bauteil |
| 6 | Dichtungselement |
| 7 | Ausnehmung im äußeren Bauteil |
| 8 | Nut |
| 9 | Dichtscheibe |
| 10 | Faltenbalg |
| 11 | Schaufelfuß |
| 12 | dünne Umhüllung |
| 13 | Füllung |

## Patentansprüche

1. Dichtungsanordnung, im Ausgangszustand umfassend: ein erstes Bauteil (1) und ein zweites Bauteil (2) einer in Betrieb um eine gemeinsame Rotationsachse (3) rotierenden Baugruppe, insbesondere dem Rotor (1) und einer Laufschaufel (2) einer Gasturbinenkomponente, wobei das zweite Bauteil (2) bezüglich der Rotationsachse (3) radial außerhalb des ersten Bauteils (1) angeordnet ist; einen Strömungskanal (4), der sich im Wesentlichen in radialer Richtung durch das erste Bauteil und das zweite Bauteil hindurch erstreckt, und welcher am Übergang vom ersten Bauteil zum zweiten Bauteil eine abzudichtende Nahtstelle aufweist;
sowie ein Dichtungselement;
wobei das erste Bauteil eine den Strömungskanal umgebende Ausnehmung an der Grenzfläche zwischen dem ersten und dem zweiten Bauteil aufweist, und das Dichtungselement in der Ausnehmung angeordnet ist,
wobei das Dichtungselement (6) derart ausgebildet ist, dass es bei der Montage nicht über die Ausnehmung (5) hinausragt oder nur soweit über die Ausnehmung hinausragt, dass es bei der Montage nicht störend im Wege steht, und bei der Rotation der Baugruppe durch die einwirkende Fliehkraft wenigstens an das zweite Bauteil angepresst wird, **dadurch gekennzeichnet, dass** das Dichtungselement durch die Fliehkraft eine elastische und/oder plastische Verformung erfährt und somit eine dichtende Verbindung des Strömungskanals an der Nahtstelle zwischen den Bauteilen (1, 2) herstellt.

2. Dichtungsanordnung nach Anspruch 1,
**dadurch gekennzeichnet,**
**dass** das Dichtungselement (6) derart ausgebildet ist, dass es im Ruhezustand der Baugruppe seine bei der Montage vorliegende Ausgangsform einnimmt.

3. Dichtungsanordnung nach Anspruch 1 oder 2,
**dadurch gekennzeichnet,**
**dass** das Dichtungselement (6) beim Betrieb der Baugruppe eine dichtende Verbindung zwischen Kühlkanälen (4) der zwei Bauteile (1, 2) abdichtet.

4. Dichtungsanordnung nach Anspruch 3,
**dadurch gekennzeichnet,**
**dass** das Dichtungselement (6) einen zentralen Bereich mit einer Durchgangsöffnung sowie einen Randbereich aufweist und derart dimensioniert ist, dass der zentrale Bereich durch die bei der Rotation auftretende Fliehkraft gegen das äußere Bauteil (2) und der Randbereich gegen die Seitenwände der Ausnehmung (5) des inneren Bauteils (1) gepresst werden.

5. Dichtungsanordnung nach Anspruch 4,
**dadurch gekennzeichnet,**
**dass** das Dichtungselement (6) eine tellerfederartige Form aufweist, wobei der Randbereich vom äußeren Bauteil (2) weggerichtet und verformbar ausgebildet ist.

6. Dichtungsanordnung nach Anspruch 3,
**dadurch gekennzeichnet,**
**dass** das Dichtungselement (6) ringförmig mit annähernd U-fömigem Querschnitt des den Ring bildenden Dichtungskörpers ausgebildet ist, wobei der äußere Schenkel des U-fömigen Querschnitts über den inneren Schenkel hinausragt und die Schenkel zum äußeren Bauteil (2) gerichtet sind.

7. Dichtungsanordnung nach Anspruch 3,
**dadurch gekennzeichnet,**
**dass** das Dichtungselement (6) in der Ausnehmung (5) fixiert ist und einen expandierbaren Bereich aufweist, der durch die Fliehkraft gegen das äußere Bauteil (2) gepresst wird.

8. Dichtungsanordnung nach Anspruch 7,
**dadurch gekennzeichnet,**
**dass** der expandierbare Bereich teleskopartig ausgebildet ist.

9. Dichtungsanordnung nach Anspruch 7,
**dadurch gekennzeichnet,**
**dass** der expandierbare Bereich durch einen Faltenbalg (10) gebildet wird, an dessen nicht fixiertem Ende eine als Dichtscheibe (9) ausgebildete Masse angebracht ist.

10. Dichtungsanordnung nach Anspruch 3,
**dadurch gekennzeichnet,**
**dass** das Dichtungselement (6) durch einen Ring aus einem dünnen Material (12) gebildet wird, der mit einer Flüssigkeit (13) gefüllt ist.

11. Dichtungsanordnung nach Anspruch 3,
**dadurch gekennzeichnet,**
**dass** das Dichtungselement (6) durch einen Ring aus einem dünnen ersten Material (12) gebildet wird, der mit einem zweiten Material (13) gefüllt ist, das sich bei Betriebstemperatur der Baugruppe verflüssigt.

12. Dichtungsanordnung nach Anspruch 3,
**dadurch gekennzeichnet,**
**dass** das Dichtungselement (6) durch ein Dichtfluid mit hoher Oberflächenspannung gebildet ist, das sich gegebenenfalls erst bei Betriebstemperatur der Baugruppe verflüssigt.

13. Dichtungsanordnung nach einem der Ansprüche 1 bis 12,
**dadurch gekennzeichnet,**
**dass** das Dichtungselement (6) einen thermischen Ausdehnungskoeffizienten aufweist, der über dem des umgebenden Materials der Bauteile liegt.

14. Dichtungsanordnung nach einem der Ansprüche 1 bis 11,
**dadurch gekennzeichnet,**
**dass** ein Federelement vorgesehen ist, durch das das Dichtungselement (6) im Ruhezustand der Baugruppe wieder in die Ausgangslage bewegt wird.

15. Dichtungsanordnung umfassend ein erstes Bauteil (1) und ein zweites Bauteil (2) einer in Betrieb um eine gemeinsame Rotationsachse (3) rotierenden Baugruppe, insbesondere dem Rotor (1) und einer Laufschaufel (2) einer Gasturbinenkomponente, wobei das zweite Bauteil (2) bezüglich der Rotationsachse (3) radial ausserhalb des ersten Bauteils (1) angeordnet ist; einen Strömungskanal (4), der sich im Wesentlichen in radialer Richtung durch das erste Bauteil und das zweite Bauteil hindurch erstreckt, und welcher am Übergang vom ersten Bauteil zum zweiten Bauteil eine abzudichtende Nahtstelle aufweist;
sowie ein Dichtungselement;
wobei das erste Bauteil eine den Strömungskanal umgebende Ausnehmung an der Grenzflächezwischen dem ersten Bauteil und dem zweiten Bauteil aufweist,
und das Dichtungselement in der Ausnehmung angeordnet ist,
wobei das Dichtungselement (6) nicht über die Ausnehmung (5) hinausragt oder nur so weit über die Ausnehmung hinausragt, dass es bei der Montage nicht störend im Wege steht, **dadurch gekennzeichnet, dass** das zweite Bauteil (2) derart befestigt ist, dass bei einer Rotation der Baugruppe im Betrieb einwirkende Kräfte ein Kippmoment auf das zweite Bauteil (2) ausüben, durch das das zweite Bauteil (2) gegen das Dichtungselement (6) gepresst wird.

16. Verfahren zur Herstellung einer Dichtverbindung zwischen einem ersten Bauteil (1) und einem zweiten Bauteil (2) einer im Betrieb um eine gemeinsame Rotationsachse (3) rotierenden Baugruppe, insbesondere dem Rotor (1) und einer Laufschaufel (2) einer Gasturbinenkomponente, wobei das zweite Bauteil bezüglich der Rotationsachse radial außerhalb des ersten Bauteils angeordnet ist, und wobei sich ein Strömungskanal (4) im Wesentlichen radial durch das erste Bauteil und das zweite Bauteil hindurch erstreckt, welcher Strömungskanal am Übergang zwischen dem ersten und dem zweiten Bauteil eine abzudichtende Nahtstelle aufweist, und wobei das erste Bauteil eine den Strömungskanal umgebende Ausnehmung an der Grenzfläche zwischen dem ersten und dem zweiten Bauteil aufweist, umfassend:
- Bereitstellen eines Dichtungselementes (6), das nach Einsetzen in die Ausnehmung (5) nicht über die Ausnehmung (5) hinausragt oder nur soweit über die Ausnehmung hinausragt, dass es bei der Montage nicht störend im Wege steht, und derart ausgebildet ist, dass es durch Beaufschlagung mit einer zum anderen Bauteil (2) gerichteten Kraft die dichtende Verbindung herstellen kann;
- Einsetzen des Dichtungselementes (6) in die Ausnehmung (5) ;
- Beaufschlagen des Dichtungselementes (6) mit einer zum anderen Bauteil (2) gerichteten Fliehkraft durch Rotation oder Schleudern der Bauteile (1, 2);
- elastisches und/oder plastisches Verformen des Dichtungselementes zur Herstellung der Dichtwirkung an der Nahtstelle zwischen dem ersten und dem zweiten Bauteil.

17. Verfahren nach Anspruch 16,
**dadurch gekennzeichnet,**
**dass** das Material des Dichtungselementes (6) beim Schleudern oder bei der Rotation der beiden Bauteile (1, 2) durch Erhöhung der Temperatur geschmolzen wird.

18. Verfahren nach Anspruch 17,
**dadurch gekennzeichnet,**
**dass** ein Dichtungselement (6) aus einem niedrigschmelzenden Material eingesetzt wird.

19. Verfahren nach einem der Ansprüche 16 bis 18 zum Abdichten einer Kühlkanalverbindung (4) zwischen den zwei Bauteilen (1, 2).

## Claims

1. Sealing arrangement, in the initial state comprising:
a first element (1) and a second element (2) of a unit rotating about a common axis of rotation (3) in operation, in particular the rotor (1) and a moving blade (2) of a gas turbine component, the second element (2) being arranged radially outside the first element (1) with respect to the axis of rotation (3);
a flow passage (4), which extends essentially in the radial direction through the first element and the second element, and which has a seam to be sealed at the transition from the first element to the second element;
and a sealing element;
the first element having a recess, which surrounds the flow passage, at the boundary surface between the first and the second element, and the sealing element being arranged in the recess,
the sealing element (6) being designed in such a manner that, during installation, it does not protrude beyond the recess (5) or only protrudes beyond the recess such that it is not annoyingly in the way during installation, and, during rotation of the unit, is pressed against at least the second element by the centrifugal force in action, **characterized in that** the sealing element undergoes an elastic and/or plastic deformation because of the centrifugal force and therefore makes a sealing joint of the flow passage at the seam between the elements (1, 2).

2. Sealing arrangement according to Claim 1, **characterized in that** the sealing element (6) is designed in such a manner that, in the inoperative state of the unit, it assumes its initial shape present during installation.

3. Sealing arrangement according to Claim 1 or 2, **characterized in that** the sealing element (6) seals a sealing joint between cooling passages (4) of the two elements (1, 2) during operation of the unit.

4. Sealing arrangement according to Claim 3, **characterized in that** the sealing element (6) has a central region with a passage opening and an edge region and is dimensioned in such a manner that the central region is pressed against the outer element (2) and the edge region is pressed against the side walls of the recess (5) of the inner element (1) by means of the centrifugal force occurring during rotation.

5. Sealing arrangement according to Claim 4, **characterized in that** the sealing element (6) has a shape in the manner of a Belleville spring, with the edge region being designed such that it is directed away from the outer element (2) and is deformable.

6. Sealing arrangement according to Claim 3, **characterized in that** the sealing element (6) is formed annularly with an approximately U-shaped cross section of the sealing body forming the ring, the outer limb of the U-shaped cross section protruding beyond the inner limb and the limbs being directed towards the outer element (2).

7. Sealing arrangement according to Claim 3, **characterized in that** the sealing element (6) is fixed in the recess (5) and has an expandable region which is pressed against the outer element (2) by means of the centrifugal force.

8. Sealing arrangement according to Claim 7, **characterized in that** the expandable region is of telescopic design.

9. Sealing arrangement according to Claim 7 **characterized in that** the expandable region is formed by an expansion bellows (10) to the non-fixed end of which a mass designed as a sealing washer (9) is fitted.

10. Sealing arrangement according to Claim 3, **characterized in that** the sealing element (6) is formed by a ring of a thin material (12) which is filled with a liquid (13).

11. Sealing arrangement according to Claim 3, **characterized in that** the sealing element (6) is formed by a ring of a thin first material (12) which is filled with a second material (13) which liquefies at the operating temperature of the unit.

12. Sealing arrangement according to Claim 3, **characterized in that** the sealing element (6) is formed by a sealing fluid with high surface tension which, if appropriate, only liquefies at the operating temperature of the unit.

13. Sealing arrangement according to one of Claims 1 to 12, **characterized in that** the sealing element (6) has a thermal coefficient of expansion which lies above that of the surrounding material of the elements.

14. Sealing arrangement according to one of Claims 1 to 11, **characterized in that** a spring element is provided by means of which the sealing element (6) is moved again into the initial position in the inoperative state of the unit.

15. Sealing arrangement, comprising:
a first element (1) and a second element (2) of a unit rotating about a common axis of rotation (3) in operation, in particular the rotor (1) and a moving blade (2) of a gas turbine component, the second element (2) being arranged radially outside the first element (1) with respect to the axis of rotation (3);
a flow passage (4), which extends essentially in the radial direction through the first element and the second element, and which has a seam to be sealed at the transition from the first element to the second element;
and a sealing element;
the first element having a recess, which surrounds the flow passage, at the boundary surface between the first element and the second element, and the sealing element being arranged in the recess,
the sealing element (6) not protruding beyond the recess (5) or only protruding beyond the recess to an extent such that it is not annoyingly in the way during installation, **characterized in that** the second element (2) is fastened in such a manner that, during rotation of the unit, forces in action during operation exert a tilting moment on the second element (2) by means of which the second element (2) is pressed against the sealing element (6).

16. Method for making a sealing joint between a first element (1) and a second element (2) of a unit rotating about a common axis of rotation (3) in operation, in particular the rotor (1) and a moving blade (2) of a gas turbine component,
the second element being arranged radially outside the first element with respect to the axis of rotation, and a flow passage (4) extending essentially radially through the first element and the second element, which flow passage has a seam to be sealed at the transition between the first and the second element, and the first element having a recess, which surrounds the flow passage, at the boundary surface between the first and the second element, comprising:
- provision of a sealing element (6) which, after insertion into the recess (5), does not protrude beyond the recess (5) or only protrudes beyond the recess to an extent such that it is not annoyingly in the way during installation, and is designed in such a manner that, being subjected to a force directed towards the other element (2), it can make the sealing joint;
- insertion of the sealing element (6) into the recess (5);
- subjecting the sealing element (6) to a centrifugal force directed towards the other element (2), by means of rotation or spinning of the elements (1, 2);
- elastic and/or plastic deformation of the sealing element to produce the sealing effect at the seam between the first and the second element.

17. Method according to Claim 16, **characterized in that** the material of the sealing element (6) is melted by an increase in the temperature during spinning or during rotation of the two elements (1, 2).

18. Method according to Claim 17, **characterized in that** a sealing element (6) made from a low-melting material is used.

19. Method according to one of Claims 16 to 18 for sealing a cooling passage joint (4) between the two elements (1, 2).

## Revendications

1. Agencement de joint d'étanchéité, comprenant, dans l'état initial:
un premier composant (1) et un deuxième composant (2) d'un module tournant en fonctionnement autour d'un axe de rotation commun (3), notamment le rotor (1) et une aube mobile (2) d'une composante de turbine à gaz, le deuxième composant (2) étant disposé par rapport à l'axe de rotation (3), radialement à l'extérieur du premier composant (1) ;
un canal d'écoulement (4) qui s'étend essentiellement dans la direction radiale à travers le premier composant et le deuxième composant, et qui présente au niveau de la transition du premier composant au deuxième composant une jonction à étanchéifier ;
ainsi qu'un élément d'étanchéité ;
le premier composant présentant un évidement entourant le canal d'écoulement au niveau de l'interface entre le premier et le deuxième composant, et l'élément d'étanchéité étant disposé dans l'évidement,
l'élément d'étanchéité (6) étant réalisé de telle sorte que lors du montage il ne dépasse pas au-delà de l'évidement (5) ou qu'il ne dépasse au-delà de l'évidement que dans une mesure telle qu'il ne soit pas gênant lors du montage, et que lors de la rotation du module par la force centrifuge agissant, il soit pressé au moins contre le deuxième composant,
**caractérisé en ce que**
l'élément d'étanchéité subit du fait de la force centrifuge une déformation élastique et/ou plastique et donc crée une connexion étanche du canal d'écoulement au niveau de la jonction entre les composants (1, 2).

2. Agencement de joint d'étanchéité selon la revendication 1,
**caractérisé en ce que**
l'élément d'étanchéité (6) est réalisé de telle sorte qu'il adapte sa forme de départ existant lors du montage dans l'état de repos du module.

3. Agencement de joint d'étanchéité selon la revendication 1 ou 2,
**caractérisé en ce que**
l'élément d'étanchéité (6) étanchéifie lors du fonctionnement du module une connexion hermétique entre des canaux de refroidissement (4) des deux composants (1, 2).

4. Agencement de joint d'étanchéité selon la revendication 3,
**caractérisé en ce que**
l'élément d'étanchéité (6) présente une région centrale avec une ouverture de passage ainsi qu'une région de bord et est dimensionné de telle sorte que la région centrale soit pressée, par la force centrifuge se produisant lors de la rotation, contre le composant extérieur (2) et que la région de bord soit pressé contre les parois latérales de l'évidement (5) du composant intérieur (1).

5. Agencement de joint d'étanchéité selon la revendication 4,
**caractérisé en ce que**
l'élément d'étanchéité (6) présente une forme de type ressort Belleville, la région de bord étant détournée du composant extérieur (2) et étant réalisée de manière déformable.

6. Agencement de joint d'étanchéité selon la revendication 3,
**caractérisé en ce que**
l'élément d'étanchéité (6) est réalisé avec une forme annulaire avec une section transversale approximativement en forme de U du corps d'étanchéité formant la bague, la branche extérieure de la section transversale en forme de U dépassant au-delà de la branche intérieure et les branches étant orientées vers le composant extérieur (2).

7. Agencement de joint d'étanchéité selon la revendication 3,
**caractérisé en ce que**
l'élément d'étanchéité (6) est fixé dans l'évidement (5) et présente une région extensible qui est pressée par la force centrifuge contre le composant extérieur (2).

8. Agencement de joint d'étanchéité selon la revendication 7,
**caractérisé en ce que**
la région extensible est réalisée sous forme télescopique.

9. Agencement de joint d'étanchéité selon la revendication 7,
**caractérisé en ce que**
la région extensible est formée par un soufflet (10) à l'extrémité non fixée duquel est montée une masse réalisée sous forme de disque d'étanchéité (9).

10. Agencement de joint d'étanchéité selon la revendication 3,
**caractérisé en ce que**
l'élément d'étanchéité (6) est formé par une bague en matériau mince (12), qui est remplie d'un liquide (13).

11. Agencement de joint d'étanchéité selon la revendication 3,
**caractérisé en ce que**
l'élément d'étanchéité (6) est formé par une bague en un premier matériau mince (12) qui est remplie d'un deuxième matériau (13) qui se liquéfie à la température de fonctionnement du module.

12. Agencement de joint d'étanchéité selon la revendication 3,
**caractérisé en ce que**
l'élément d'étanchéité (6) est formé par un fluide d'étanchéité de grande tension superficielle, qui se liquéfie éventuellement qu'à la température de fonctionnement du module.

13. Agencement de joint d'étanchéité selon l'une quelconque des revendications 1 à 12,
**caractérisé en ce que**
l'élément d'étanchéité (6) présente un coefficient de dilatation thermique qui est supérieur à celui du matériau environnant des composants.

14. Agencement de joint d'étanchéité selon l'une quelconque des revendications 1 à 11,
**caractérisé en ce que**
l'on prévoit un élément à ressort qui permet de déplacer à nouveau l'élément d'étanchéité (6) dans la position de départ dans l'état de repos du module.

15. Agencement de joint d'étanchéité comprenant un premier composant (1) et un deuxième composant (2) d'un module tournant en fonctionnement autour d'un axe de rotation commun (3), notamment le rotor (1) et une aube mobile (2) d'une composante de turbine à gaz, le deuxième composant (2) étant disposé par rapport à l'axe de rotation (3), radialement à l'extérieur du premier composant (1) ;
un canal d'écoulement (4) qui s'étend essentiellement dans la direction radiale à travers le premier composant et le deuxième composant, et qui présente au niveau de la transition du premier composant au deuxième composant une jonction à étanchéifier ;
ainsi qu'un élément d'étanchéité ;
le premier composant présentant un évidement entourant le canal d'écoulement au niveau de l'interface entre le premier et le deuxième composant,
et l'élément d'étanchéité étant disposé dans l'évidement,
l'élément d'étanchéité (6) ne dépassant pas au-delà de l'évidement (5) ou dépassant au-delà de l'évidement que dans une mesure telle qu'il ne soit pas gênant lors du montage, **caractérisé en ce que** le deuxième composant (2) est fixé de telle sorte que les forces agissant en fonctionnement lors d'une rotation du module exercent un couple de basculement sur le deuxième composant (2), par lequel le deuxième composant (2) est pressé contre l'élément d'étanchéité (6).

16. Procédé de fabrication d'un agencement de joint d'étanchéité entre un premier composant (1) et un deuxième composant (2) d'un module tournant en fonctionnement autour d'un axe de rotation commun (3), notamment le rotor (1) et une aube mobile (2) d'une composante de turbine à gaz, le deuxième composant étant disposé par rapport à l'axe de rotation, radialement à l'extérieur du premier composant, et un canal d'écoulement (4) s'étendant essentiellement radialement à travers le premier composant et le deuxième composant, lequel canal d'écoulement présente, au niveau de la transition du premier composant au deuxième composant, une jonction à étanchéifier et le premier composant présentant un évidement entourant le canal d'écoulement au niveau de l'interface entre le premier et le deuxième composant, comprenant :
- la fourniture d'un élément d'étanchéité (6) qui après son insertion dans l'évidement (5) ne dépasse pas au-delà de l'évidement (5) ou dépasse au-delà de l'évidement seulement dans une mesure telle qu'il ne soit pas gênant lors du montage, et qui est réalisé de telle sorte qu'il puisse créer, par sollicitation avec une force orientée vers l'autre composant (2), la connexion étanche ;
- l'insertion de l'élément d'étanchéité (6) dans l'évidement (5) ;
- la sollicitation de l'élément d'étanchéité (6) avec une force centrifuge orientée vers le deuxième composant (2) par rotation ou accélération des composants (1, 2) ;
- la déformation élastique et/ou plastique de l'élément d'étanchéité pour la création de l'effet d'étanchéité au niveau de la jonction entre le premier et le deuxième composant.

17. Procédé selon la revendication 16,
**caractérisé en ce que**
le matériau de l'élément d'étanchéité (6) est fondu par augmentation de la température lors de l'accélération ou de la rotation des deux composants (1, 2).

18. Procédé selon la revendication 17,
**caractérisé en ce que**
l'on utilise un élément d'étanchéité (6) constitué d'un matériau à bas point de fusion.

19. Procédé selon l'une quelconque des revendications 16 à 18, pour l'étanchéification d'une connexion de canal de refroidissement (4) entre les deux composants (1, 2).
